# EUROPEAN PATENT APPLICATION

(11) **EP 1 975 671 A2**
(43) Date of publication of application: **01.10.2008**
(21) Application number: 07023064.4
(22) Date of filing: 28.11.2007
(51) Int. Cl.: G02B 21/24, G02B 21/30

(54) **Observation system**

(30) Priority: 28.03.2007 JP 2007085014
(71) Applicant: Olympus Corporation, Tokyo 151-0072 (JP)
(72) Inventor: Minamide, Takeshi, Tokyo 192-0063 (JP); Tanikawa, Yoshihisa, Tokyo 103-0013 (JP); Takahashi, Seiya, Chofu-shi Tokyo 182-0024 (JP); Sato, Tomoaki, Higashiyamato-shi Tokyo 207-0013 (JP)
(74) Representative: Thum, Bernhard

(57) **Abstract**

A suitable clear image is obtained in observation of a specimen (A) exhibiting dynamic motion, for example, during in vivo observation. The invention provides an observation system (1) including an optical apparatus (4) including an objective unit (3) that is positioned close to a specimen (A); and a stabilizer (5) adhered to the specimen, at least around an observation region of the optical apparatus (1), to restrain motion of the specimen (A), wherein a heat-transfer preventing member for preventing transfer of heat between the stabilizer and the specimen (A) is provided on the stabilizer (5).

## Description

### BACKGROUND OF THE INVENTION

### 1. FIELD OF THE INVENTION

The present invention relates to an observation system.

This application is based on Japanese Patent Application No. 2007-085014, the content of which is incorporated herein by reference.

### 2. DESCRIPTION OF RELATED ART

Recent biology research has involved visualization of ion concentration, membrane potential and so forth with fluorescent probes using optical apparatuses. For example, using an individual laboratory animal as a specimen, so-called in vivo observation is performed, where its internal organs and so forth are observed while the animal is still alive. In in vivo observation, however, because the observed subject exhibits motion such as pulsing, breathing, etc., shifting of the observation site and defocusing often occur.

One known way to eliminate such shifting of the observation site and defocusing is to use an observation apparatus provided with a device for restraining a specimen that exhibits dynamic motion (for example, see Japanese Unexamined Patent Applications, Publication Nos. 2005-338631 and 2006-194981).

This observation apparatus is provided with a stabilizer which can be adhered to the specimen. By directly pressing the specimen with the stabilizer to suppress the specimen's dynamic motion, it is possible to obtain clear images.

However, with such a conventional observation apparatus, because the motion of the organism is physically restrained, there is a risk of causing changes in body temperature, pressing blood vessels and internal organs, and so on. In particular, the stabilizer is formed of a material having high rigidity, such as metal, to ensure strength. However, when a stabilizer constructed of metal or the like is adhered directly to the specimen, heat transfer occurs between the stabilizer and the specimen, which is a problem because it causes a drop in body temperature of the organism. Therefore, there is a drawback in that it is not possible to obtain suitable images when performing in vivo observation of the specimen.

### BRIEF SUMMARY OF THE INVENTION

The present invention has been conceived in light of the situation described above, and an object thereof is to provide an observation system that can obtain suitable clear images in observation of a specimen exhibiting dynamic motion, for example, during in vivo observation.

To realize the object described above, the present invention provides the following solutions.

The present invention provides an observation system including an optical apparatus including an objective unit disposed close to a specimen; and a stabilizer that is adhered to the specimen, at least around an observation region of the optical apparatus, to restrain motion of the specimen, wherein a heat-transfer preventing member configured to prevent transfer of heat between the stabilizer and the specimen is provided on the stabilizer.

According to the present invention, by adhering the stabilizer to the specimen, even if the specimen exhibits dynamic motion, the motion of the observation region located inside the stabilizer is suppressed. Therefore, a change in relative position of the objective unit and the specimen can be reduced, which makes it possible to acquire clear, blur-free images with the optical apparatus.

In this case, by operating the heat-transfer preventing member provided on the stabilizer, transfer of heat between the adhered stabilizer and the specimen can be prevented, and a temperature change in the specimen caused by adhering the stabilizer can thus be reduced. Accordingly, even when performing in vivo observation of the specimen, it is possible to carry out proper observation while keeping the specimen in a more natural state.

In the aspect of the invention described above, the heat-transfer preventing member may be formed of a heating device configured to heat the stabilizer.

With this configuration, it is possible to set the stabilizer to a desired temperature by operating the heating device, for example, the same temperature as the specimen. Therefore, it is possible to prevent a temperature change in the specimen due to contact between the stabilizer and the specimen.

In the configuration described above, the stabilizer may be provided with a temperature-change measuring device configured to measure a temperature change in the specimen, which is in contact therewith.

With this configuration, by heating the stabilizer itself while continuously monitoring the temperature of the specimen with the temperature-change measuring device, it is possible to reduce a temperature change in the specimen due to contact between the stabilizer and the specimen, which allows the specimen to be maintained at a predetermined temperature.

In the aspect of the invention described above, the heat-transfer preventing member may be formed of a material having heat-insulating properties disposed at least on an adhesion surface of the stabilizer that adheres to the specimen.

In the aspect of the invention described above, a coating having heat-insulating properties may be coated on the adhesion surface.

With this configuration, it is possible to reduce the transfer of heat between the stabilizer and the specimen, which can prevent a temperature change in the specimen due to contact with the stabilizer.

The aspect of the invention described above may further include a stage configured to mount the specimen, wherein the stage may be provided with a heating device configured to heat the specimen mounted thereon.

With this configuration, it is possible to warm up the entire specimen by operating the heating device to heat the stage. For example, when the specimen is a small laboratory animal or the like, if it is put to sleep during observation by using anesthetic gas, the body temperature drops. Therefore, by heating the specimen with the heating device on the stage, it is possible to maintain the health of the specimen.

In the aspect of the invention described above, the stabilizer may include a tip that adheres to the specimen and an arm configured to support the tip, and a heat-insulating member configured to prevent transfer of heat with the specimen may be provided in a portion of the arm that contacts the specimen.

With this configuration, it is possible to reduce a temperature change in the specimen which is in contact with not only the tip that adheres to the specimen but also the arm that supports the tip.

According to the present invention, because observation is performed while the periphery of the observation region of the specimen is pressed by the stabilizer, it is possible to obtain clear, low-blur images of the specimen. In addition, the present invention affords an advantage in that it is possible to reduce a temperature change in the specimen due to adhesion of the stabilizer to the specimen, thus allowing proper observation to be carried out while keeping the specimen in a state closer to its natural state.

### BRIEF DESCRIPTION OF THE SEVERAL VIEWS OF THE DRAWINGS

Fig. 1 is a diagram showing the overall configuration of an optical observation system according to a first embodiment of the present invention.

Fig. 2 is a perspective view showing the relationship between an objective unit and a stabilizer in the optical observation system in Fig. 1.

Fig. 3 is a bottom view showing the structure of the tip of the stabilizer in Fig. 2.

Fig. 4 is a sectional view showing the structure of the tip of the stabilizer in Fig. 2.

Fig. 5 is a diagram showing the overall configuration of an optical observation system according to a second embodiment of the present invention.

Fig. 6 is a bottom view showing the structure of the tip of a stabilizer in Fig. 5.

Fig. 7 is a sectional view showing the structure of the tip of the stabilizer in Fig. 5.

Fig. 8 is a sectional view showing a modification of the stabilizer in Fig. 5.

Fig. 9 is a flowchart for explaining the relationship between a thermistor, a heating device, and a temperature control unit in the optical observation system in Fig. 1.

Fig. 10 is a flowchart for explaining the relationship between a thermistor, a heating device, and a temperature control unit in the optical observation system in Fig. 5.

### DETAILED DESCRIPTION OF THE INVENTION

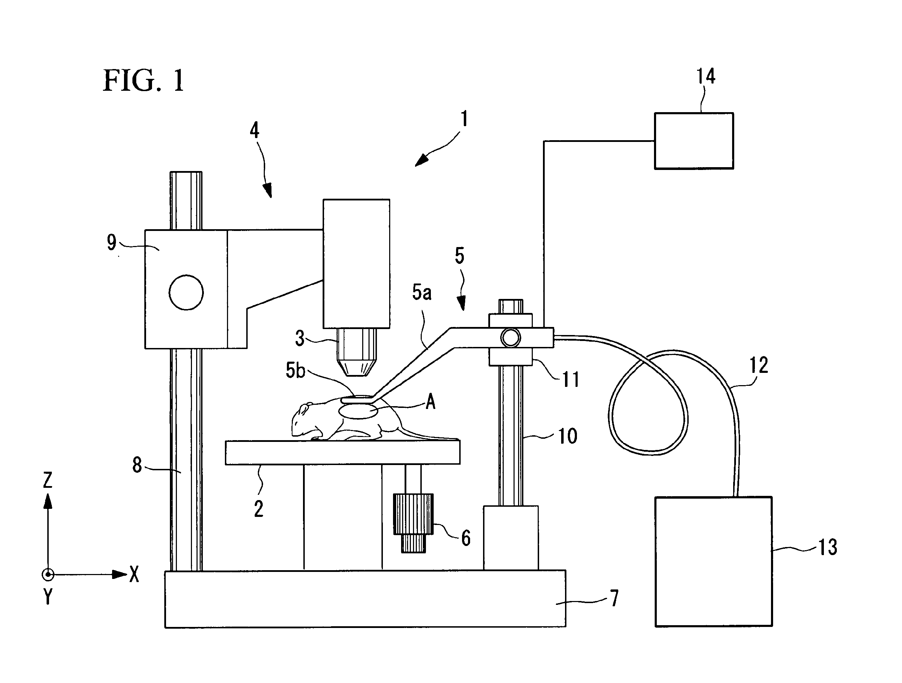

An observation system according to a first embodiment of the present invention will be described below with reference to Figs. 1 to 4.

As shown in Fig. 1, the observation system 1 according to this embodiment includes a stage 2, an optical apparatus 4, a stabilizer 5, and a movement-restricting device (raising-and-lowering mechanism) 11. The stage 2 is for mounting a specimen A, for example, biological tissue such as cells or muscle tissue of mammals, including small laboratory animals or the like, or various internal organs such as the heart, liver, and so forth. The optical apparatus 4 includes an objective unit 3 which is disposed to face the specimen A on the stage 2 and which has a predetermined depth of focus. The stabilizer 5 is disposed close to the optical apparatus 4, and the movement-restricting device 11 restricts the range of movement of the stabilizer 5.

The stage 2 is provided with an adjustment dial 6; by operating the adjustment dial 6, it is possible to move the specimen A in two horizontal directions, for example, the X and Y directions. The optical apparatus 4 is attached to a support column 8 that extends vertically from a base 7 in such a manner that it can be moved up and down by a raising-and-lowering mechanism 9. By aligning the objective unit 3 so as to point vertically downward, it is possible to observe the specimen A on the stage 2. Also, the objective unit 3 can be brought closer to or further away from the specimen A by operating the raising-and-lowering mechanism 9, allowing the focus to be adjusted.

The stabilizer 5 includes an arm 5a attached to a support column 10, which also extends vertically from the base 7 in a similar fashion, so as to be capable of being moved up and down by the raising-and-lowering mechanism 11; a tip 5b disposed at the end of the arm 5a; and a suction pump 13 for sucking in air via a tube 12 connected to the arm 5a.

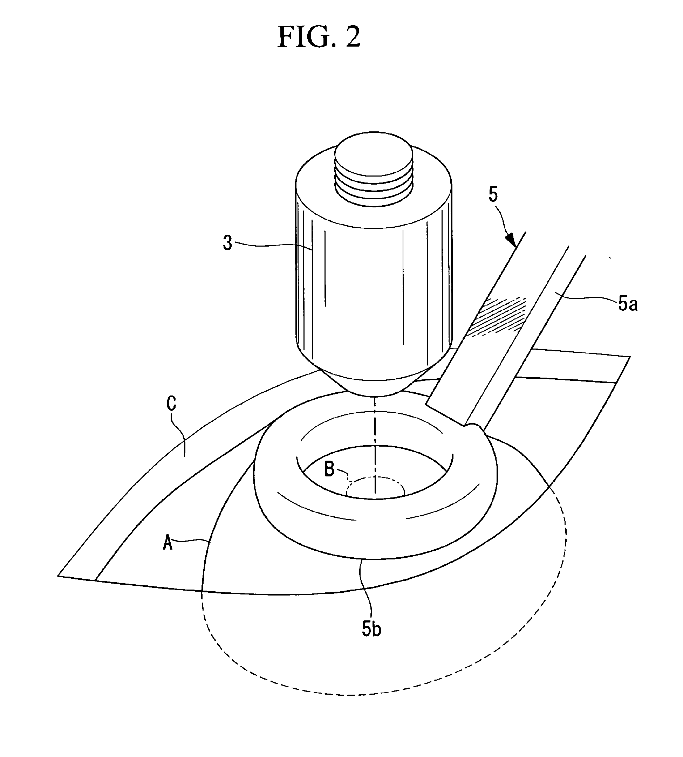

As shown in Fig. 2, the tip 5b is formed in the shape of a ring. The tip 5b is adhered to the specimen A, and an observation region B (indicated by broken line in the drawing) to be observed by the objective unit 3 is disposed inside the circle.

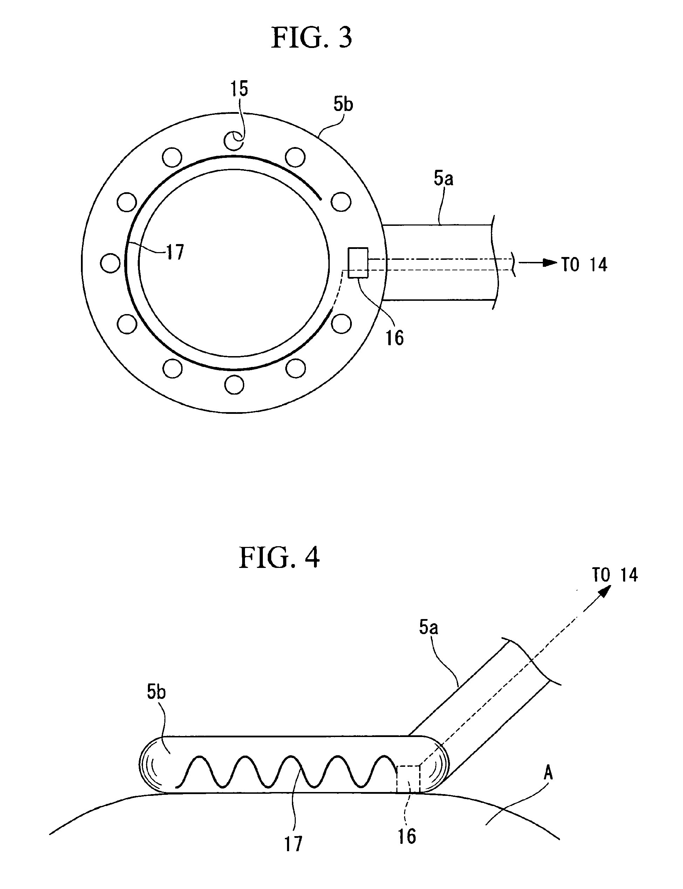

The arm 5a and the tip 5b have a hollow structure. As shown in Fig. 3, a plurality of suction holes 15 are provided in the bottom surface of the tip 5b. When the suction pump 13 is operated, air drawn in via the suction holes 15 is sucked through the tip 5b, the arm 5a, and the tube 12. In other words, by operating the suction pump 13 with the tip 5b in contact with the specimen A so that all of the suction holes 15 in the lower surface of the tip 5b are covered, the pressure inside the tip 5b, the arm 5a, and the tube 12 becomes lower than atmospheric pressure, and the tip 5b and the specimen A are thus kept attached to each other by suction.

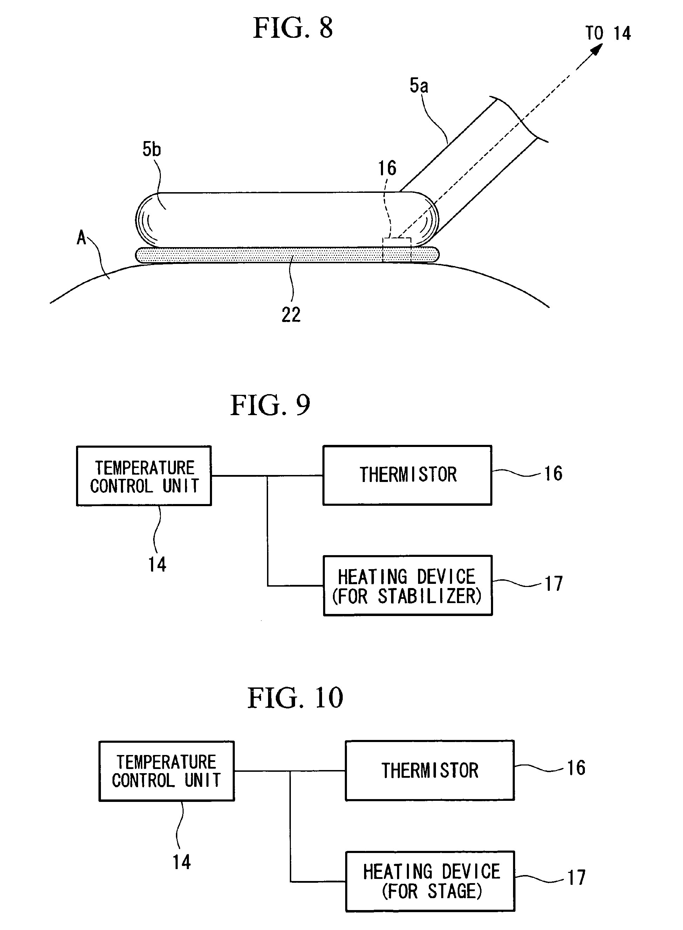

As shown in Figs. 3 and 4, in the observation system 1 according to this embodiment, a heating device (heat-transfer preventing member) 17 such as a heater is provided in the tip 5b of the stabilizer 5. The heating device 17 is formed of a material that generates heat when conducting electricity, such as a nichrome heating element. As shown in Fig. 9, the heating device 17 is connected to a temperature control unit 14 via the stabilizer 5 and is operated under the control of the temperature control unit 14 to heat the stabilizer 5 to a desired temperature.

As shown in Fig. 3, a thermistor 16 is attached to the lower surface of the tip 5b at a position sufficiently distant from the heating device 17 so as not to directly sense the heat from the heating device 17. As shown in Fig. 4, the thermistor 16 is disposed so as to adhere to the specimen A when restraining the specimen A with the stabilizer 5. As shown in Fig. 9, the thermistor 16 is connected to the temperature control unit 14 via the stabilizer 5, and it is thus possible to monitor the temperature of the specimen A by calculating the change in resistance of the thermistor 16, which depends on the temperature.

The operation of the observation system 1 according to this embodiment, having such a configuration, will be described below.

To observe the specimen A of a small laboratory animal etc. using the observation system 1 according to this embodiment, first, as shown in Fig. 2, an incision is made in the skin C of the small laboratory animal etc. to expose the specimen A, such as an internal organ, whereupon the raising-and-lowering mechanism 11 is operated to lower the stabilizer 5 and adhere the tip 5b of the stabilizer 5 to the surface of the specimen A. Then, the suction pump 13 is operated to suck in the air inside the tube 12 and the arm 5a, thus attaching to the specimen A by suction via the suction holes 15. Then, in this state, the objective lens 3 of the optical apparatus 4 is made to approach the observation region B disposed inside the ring of the tip 5b of the stabilizer 5 to perform focusing, and observation is carried out using the optical apparatus 4.

With the observation system 1 according to this embodiment, dynamic motion of the surface of the specimen A attached to the stabilizer 5 is suppressed by the stabilizer 5. Therefore, the observation region B inside the ring, whose dynamic motion is suppressed by the stabilizer 5, is observed with the optical apparatus 4, thus enabling clear, blur-free images to be acquired.

In this case, with the observation system 1 according to this embodiment, by operating the heating device 17 provided in the stabilizer 5, it is possible to set the stabilizer 5 itself to a desired temperature, for example, the same temperature as that of the specimen A. Therefore, it is possible to prevent a temperature change in the specimen A caused by adhering the stabilizer to the specimen A. As a result, even when performing in vivo observation of the specimen A, it is possible to perform proper observation while keeping the specimen A in a more natural state.

Also, by heating the stabilizer 5, it is possible to freely set the temperature of the surface of the specimen A adhered to the stabilizer 5 according to the observation conditions.

With the observation system 1 according to this embodiment, by monitoring the temperature of the surface of the specimen A with the thermistor 16, it is possible to quickly detect a temperature change in the specimen A cause by adhering the stabilizer 5 to the specimen A. Therefore, when a temperature change is detected in the specimen A, by operating the heating device 17 on the basis of the measured temperature change to heat the stabilizer 5, it is possible to reduce the change in temperature and thus keep the specimen A in the state it was in when observation started.

The observation system 1 according to the present invention is not limited to the embodiment described above; it is possible to employ the configuration described below.

Specifically, in the embodiment described above, the suction holes 15 are provided in the tip 5b of the stabilizer 5, and the specimen A is secured by suction, to reduce the strain on the specimen A. Instead of this, however, if the amount of variation in the dynamic motion of the specimen A is comparatively small, the dynamic motion of the specimen A may be suppressed only by the applied pressing force instead of by providing the suction holes 15.

Also, although the tip 5b of the stabilizer 5 is formed in the shape of a ring in the embodiment described above, the shape of the tip 5b is not particularly limited, and it is possible to use any other shape, such as a U-shape etc.

In the embodiment described above, a temperature change in the specimen A is prevented by providing the heating device in the tip 5b. In addition to this, however, a film (heat-insulating material; not shown) formed of a coating having heat insulating properties, like a ceramic coating, may be formed on the surface of the arm 5a, supporting the tip 5b, where it contacts the specimen.

The thermistor 16 is used as a temperature-measuring device in the embodiment described above. However it is not limited thereto; another type of temperature-measuring device may be used, such as a thermocouple. In addition, the optical apparatus 4 and the stabilizer 5 are formed as separate units by attaching them to the support columns 8 and 10, respectively, so that they can move up and down. However, the stabilizer 5 may be integrated with the objective unit 3 to form a single unit.

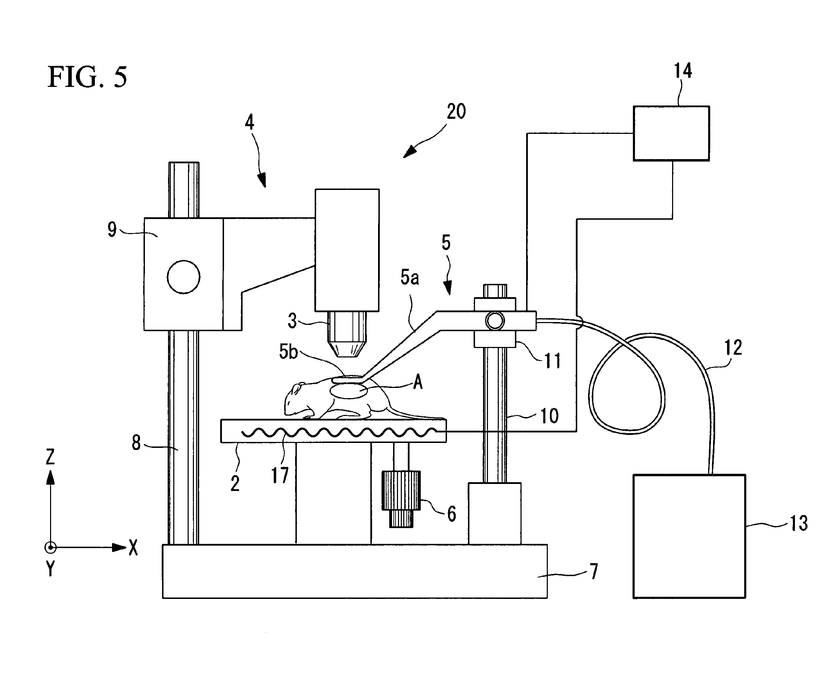

Next, an observation system 20 according to a second embodiment of the present invention will be described below with reference to Figs. 5 to 7.

In the description of this embodiment, parts that are the same as those in the observation system 1 according to the first embodiment described above are assigned the same reference numerals, and a description thereof is omitted.

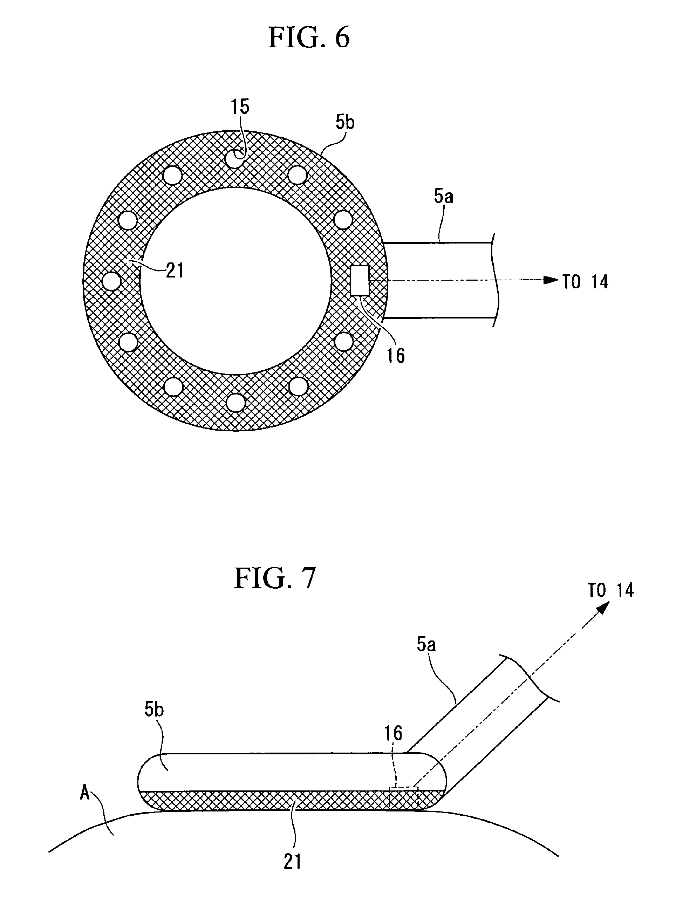

The observation system 1 according to the first embodiment is provided with a heating device 17 in the tip 5b of the stabilizer 5. As shown in Figs. 6 and 7 on the other hand, the observation system 20 according to this embodiment differs in that the lower surface of the tip 5b is covered with a coating (heat-transfer preventing member) 21 having heat insulating properties, such as a ceramic coating for example.

With the observation system 20 according to this embodiment, having such a configuration, because the heat insulating coating 21, and not the tip 5b of the stabilizer 5, adheres to the specimen A during observation, as shown in Fig. 7, it is possible to reduce the transfer of heat between the stabilizer 5 and the specimen A. Therefore, as in the observation system 1 according to the first embodiment, it is possible to prevent a temperature change of the specimen A caused by adhering the stabilizer 5 to the specimen A. As a result, even when performing in vivo observation of the specimen A, it is possible to perform proper observation while keeping the specimen A in a more natural state.

In the embodiment described above, the case where the lower surface of the tip 5b is covered with a heat insulating coating 21 was described as an example. However, the invention is not limited thereto; as shown in Fig. 8, a material 22 exhibiting a high heat insulation effect (heat insulating material, heat-transfer preventing member), for example, a hard urethane foam, may be provided on the lower surface of the tip 5b. Also, the stabilizer 5 itself may be formed of a material having heat insulating properties.

In the embodiment described above, as shown in Fig. 5, the heating device 17, such as a heater, is preferably provided on the stage 2 on which the specimen A is mounted. As shown in Fig. 10, the heating device 17, which is connected to the temperature control unit 14, may heat the stage 2 to a desired temperature by operating the heating device 17 under the control of the temperature control unit 14.

With this configuration, it is possible to heat the stage 2 by operating the heating device 17, thus warming the entire specimen A mounted on the stage 2. For example, if the specimen is a small laboratory animal or the like, its body temperature drops when it is put to sleep with anesthetic gas during observation; however, by warming the entire specimen A, it is possible to maintain the health of the specimen A.

By operating the heating device 17 on the basis of the measured temperature change to heat the stage 2 while continuously monitoring the temperature of the specimen A with the thermistor 16, it is possible to precisely set the specimen A to a desired temperature. In addition, it is also possible to arbitrarily set the temperature of the specimen A according to the observation conditions.

## Claims

1. An observation system comprising:
an optical apparatus including an objective unit positioned close to a specimen; and
a stabilizer that is adhered to the specimen, at least around an observation region of the optical apparatus, to restrain motion of the specimen,
wherein a heat-transfer preventing member configured to prevent transfer of heat between the stabilizer and the specimen is provided on the stabilizer.

2. An observation system according to Claim 1, wherein the heat-transfer preventing member is formed of a heating device configured to heat the stabilizer.

3. An observation system according to Claim 2, wherein the stabilizer is provided with a temperature-change measuring device configured to measure a temperature change in the specimen, which is in contact therewith.

4. An observation system according to Claim 1, wherein the heat-transfer preventing member is formed of a material having heat-insulating properties disposed at least on an adhesion surface of the stabilizer that adheres to the specimen.

5. An observation system according to Claim 4, wherein a coating having heat-insulating properties is coated on the adhesion surface.

6. An observation system according to Claim 1, further including a stage configured to mount the specimen, wherein the stage is provided with a heating device configured to heat the specimen mounted thereon.

7. An observation system according to Claim 1, wherein
the stabilizer includes a tip that adheres to the specimen and an arm configured to support the tip, and
a heat-insulating member configured to prevent transfer of heat with the specimen is provided in a portion of the arm that contacts the specimen.
